(19) **Europäisches Patentamt European Patent Office Office européen des brevets**

(11) **EP 3 599 140 B1**

(12) **FASCICULE DE BREVET EUROPEEN**

(45) Date de publication et mention de la délivrance du brevet:
**12.08.2020 Bulletin 2020/33**

(51) Int Cl.:
**B60W 20/10** *(2016.01)*　　**B64C 27/12** *(2006.01)*
**B64C 27/82** *(2006.01)*　　**B64D 27/02** *(2006.01)*

(21) Numéro de dépôt: **19187165.6**

(22) Date de dépôt: **19.07.2019**

(54) **PROCEDE ET DISPOSITIF DE GESTION DE L'ENERGIE D'UNE INSTALLATION MOTRICE HYBRIDE D'UN AERONEF MULTIROTOR**

VERFAHREN UND VORRICHTUNG ZUR VERWALTUNG DER ENERGIE EINER HYBRID-TRIEBWERKSANLAGE EINES MULTIROTOR-LUFTFAHRZEUGS

METHOD AND DEVICE FOR MANAGING THE ENERGY OF A HYBRID DRIVE SYSTEM OF A MULTIROTOR AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2018 FR 1800800**

(43) Date de publication de la demande:
**29.01.2020 Bulletin 2020/05**

(73) Titulaire: **Airbus Helicopters**
**13725 Marignane Cedex (FR)**

(72) Inventeurs:
- **GAZZINO, Marc**
  **13012 MARSEILLE (FR)**
- **FAURE, Bernard**
  **13700 MARIGNANE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**DE-A1-102010 021 026　　FR-A1- 2 961 767**
**US-A1- 2017 197 709　　US-A1- 2017 225 794**
**US-A1- 2018 009 542**

**Description**

La présente invention se situe dans le domaine technique des installations motrices hybrides pour aéronefs, et en particulier pour les aéronefs comportant plusieurs rotors. L'invention concerne un procédé de gestion de l'énergie d'une installation motrice hybride. L'invention concerne également un aéronef multirotor comportant une installation motrice hybride et un dispositif de gestion de l'énergie de son installation motrice hybride.

On entend par « aéronef multirotor » un aéronef à voilure tournante muni d'au moins deux rotors.

Un premier type d'aéronef multirotor peut par exemple comporter au moins un rotor principal et éventuellement un rotor anticouple, chaque rotor principal assurant la sustentation, voire la propulsion de l'aéronef et, le cas échéant, un rotor anticouple s'opposant au couple en lacet exercé par le rotor principal sur le fuselage de cet aéronef et pour permettre également de contrôler les mouvements en lacet de cet aéronef. Un tel aéronef multirotor peut aussi comporter un ou deux rotors d'avancement susceptibles d'assurer également la fonction anticouple.

Un second type d'aéronef multirotor peut comporter au moins trois rotors assurant conjointement la portance et la propulsion de l'aéronef. Un tel aéronef multirotor classiquement utilisé aujourd'hui peut comporter trois, quatre, six, huit rotors par exemple. Un tel aéronef multirotor est également désigné par le terme « drone » lorsqu'il est sans pilote, ni occupant à son bord. Chaque rotor est de préférence entraîné par un moteur électrique, mais peut toutefois être entraîné par un moteur thermique.

Une installation motrice « hybride » pour aéronef désigne une installation motrice comprenant deux sources d'énergie distinctes, une source d'énergie électrique et une source d'énergie thermique. Une source d'énergie électrique comporte au moins un dispositif de stockage de l'énergie électrique, tel qu'une batterie rechargeable ou bien non rechargeable, ou encore une pile à combustible. Une source d'énergie thermique comporte par exemple un ou plusieurs moteurs thermiques.

Selon une première architecture, l'installation motrice hybride peut comporter une source d'énergie électrique, une source d'énergie thermique, au moins une machine électrique et une chaîne de transmission mécanique de puissance munie notamment d'une boîte de transmission principale de puissance afin d'entraîner en rotation chaque rotor de l'aéronef multirotor. La boîte de transmission principale de puissance est généralement entraînée conjointement par chaque moteur thermique de la source d'énergie thermique et au moins une machine électrique. Chaque rotor peut alors être entraîné en rotation par uniquement chaque moteur thermique, par uniquement au moins une machine électrique ou bien conjointement par chaque moteur thermique et par au moins une machine électrique. Cette première architecture est notamment utilisée pour le premier type d'aéronef multirotor cité.

Une machine électrique peut être réversible, remplissant alors une fonction motrice et une fonction génératrice d'électricité. Cette machine électrique peut donc fonctionner soit selon un mode « moteur électrique » pour fournir une puissance mécanique à la boîte de transmission principale de puissance, soit selon un mode « générateur électrique » pour générer de l'énergie électrique à partir d'une puissance mécanique fournie par la boîte de transmission principale de puissance.

Une machine électrique peut également être un moteur électrique, remplissant uniquement une fonction motrice. Une machine électrique peut également être un générateur électrique remplissant uniquement la fonction générateur d'électricité.

Selon une seconde architecture, l'installation motrice hybride peut comporter une source d'énergie électrique et plusieurs machines électriques, une machine électrique remplissant par exemple uniquement une fonction génératrice et constituant un générateur électrique et les autres machines électriques remplissant uniquement une fonction motrice et constituant respectivement un moteur électrique entraînant en rotation un rotor de l'aéronef multirotor, ainsi qu'une source d'énergie thermique tel un moteur thermique, entraînant le générateur électrique. De la sorte, la source d'énergie thermique permet uniquement une production d'énergie électrique par l'intermédiaire du générateur électrique, cette énergie électrique étant distribuée directement aux machines électriques entraînant en rotation les rotors ou bien étant stockée dans la source d'énergie électrique. Cette seconde architecture est privilégiée pour le second type d'aéronef multirotor précédemment cité et est désignée « propulsion distribuée ».

Un aéronef multirotor peut être utilisé dans le cadre d'une mission de transport aérien à vocation commerciale, parapublique, voire militaire et dans des zones environnementales sensibles, telles que des villes ou bien des parcs nationaux par exemple. Ces transports aériens, notamment au sein d'une ville, sont généralement de courtes durées de l'ordre de quelques dizaines de minutes à une heure, et permettent le transport de passager(s) et/ou de marchandise(s). De plus, leurs localisations en zones sensibles imposent des contraintes environnementales aussi bien en termes de bruits que d'émissions polluantes.

Ces nuisances sonores sont générées d'une part par la rotation des rotors et d'autre part par l'utilisation d'un ou plusieurs moteurs thermiques, notamment lors des phases de décollage et d'atterrissage pour lesquelles l'installation motrice de l'aéronef multirotor doit fournir une puissance importante. De plus, chaque moteur thermique est alors une source de pollution atmosphérique lors de ces phases de décollage et d'atterrissage.

Une solution à ces nuisances pourrait être l'utilisation d'une installation motrice totalement électrique pour un tel aéronef multirotor. De plus, l'augmentation du nombre de rotors que comporte l'aéronef multirotor peut permettre de réduire le bruit généré par chaque rotor, chaque rotor pouvant avoir une vitesse de rotation réduite.

Cependant, la masse d'une installation motrice électrique et la faible densité énergétique d'une source d'énergie électrique sont des obstacles difficiles à surmonter aujourd'hui. En effet, la masse importante des moyens de stockage de l'énergie électrique limite la distance que peut parcourir un tel aéronef multirotor et la charge utile transportable.

En conséquence, afin d'assurer une autonomie suffisante pour les missions décrites ci-dessus, l'utilisation d'une installation motrice hybride ou uniquement thermique semble aujourd'hui préférable à une installation motrice totalement électrique, notamment grâce à la densité énergétique d'une source d'énergie thermique qui est plus importante que celle d'une source d'énergie électrique. On entend par « densité énergétique » la quantité d'énergie disponible par unité de masse.

L'utilisation d'un aéronef à voilure tournante avec une installation motrice thermique à base d'hydrocarbure est aujourd'hui encore la référence pour le transport de plusieurs passagers et/ou de charges utiles, quelle que soit la distance à parcourir. Des études sont cependant en cours et des prototypes d'aéronefs multirotor avec une installation motrice électrique ou hybride commencent à voir le jour.

Cependant, le coût opérationnel d'un moteur thermique étant plus important que celui d'un moteur électrique, la gestion, voire l'optimisation de la répartition de l'énergie consommée par les moteurs électriques et les moteurs thermiques d'une installation motrice hybride d'un aéronef est donc primordiale afin de l'utiliser de façon optimale. On entend par « façon optimale », une façon permettant de répondre à trois critères essentiels d'une mission de transport aérien, le respect de l'environnement, à savoir réduire les émissions polluantes et sonores, les limitations de la masse de l'aéronef multirotor ainsi que les limitations de son coût opérationnel.

L'art antérieur concernant la gestion d'une telle installation motrice hybride concerne aussi bien le domaine automobile dans lequel l'installation motrice hybride est utilisée et produite en série que le domaine aéronautique dans lequel les études se multiplient.

On connait notamment le brevet FR 3005296 qui décrit un procédé d'optimisation de la consommation énergétique d'un véhicule hybride en fonction notamment des lois de gestion de l'énergie de ce véhicule et du parcours prévu.

On connait aussi le document US 9932118 qui concerne un aéronef et décrit son fonctionnement selon deux modes, un mode dit « silence » sans utilisation d'un moteur thermique et un mode dit « normal » autorisant l'utilisation d'un ou plusieurs moteurs thermiques, sans optimiser la consommation d'énergie.

En outre, les documents EP 3034834, FR 2997382, FR 3033755, WO 2012/061819, EP 0782941 et WO 2015/123737 traitent de façon plus générale de la gestion de l'énergie d'une installation motrice hybride d'un véhicule.

Notamment, le document WO 2015/123737 concerne un système de gestion de l'énergie d'un véhicule en privilégiant la transformation de l'énergie cinétique en énergie électrique sur un parcours spécifique.

Le document WO 2012/061819 décrit une gestion de l'énergie d'un véhicule automobile hybride en fonction de sa vitesse d'avancement.

Le document FR 3033755 décrit une optimisation de la gestion de l'énergie entre les différents moyens de stockage et de production de l'énergie électrique d'un véhicule automobile.

Enfin, les documents FR 2961767, US 2018/0009542, DE 102010021026 , US 2017/0225794 et US 2017/0197709 font partie de l'arrière plan technologique de l'invention.

La présente invention a alors pour objet un procédé de gestion de l'énergie d'une installation motrice hybride d'un aéronef multirotor lors d'un vol de l'aéronef permettant de s'affranchir des limitations mentionnées ci-dessus en optimisant les consommations des énergies thermiques et électriques de cette installation motrice hybride. La présente invention a aussi pour objet un aéronef muni d'un dispositif de gestion de l'énergie d'une installation motrice hybride d'un aéronef multirotor lors d'un vol de l'aéronef mettant en œuvre ce procédé.

Ce procédé et ce dispositif de gestion de l'énergie d'une installation motrice hybride permettent ainsi l'optimisation de la consommation de l'énergie de l'aéronef multirotor en respectant les trois critères essentiels précédemment cités d'une mission de transport aérien de passager(s) et/ou de marchandise(s), à savoir le respect de l'environnement et les limitations de la masse et du coût opérationnel de l'aéronef multirotor.

L'invention a pour objet un procédé gestion de l'énergie d'une installation motrice hybride d'un aéronef multirotor lors d'un vol, l'aéronef multirotor comportant :

- une installation motrice hybride munie d'une source d'énergie thermique, d'une source d'énergie électrique et d'au moins une machine électrique, la source d'énergie thermique pouvant fournir une puissance thermique continue $W_{Th}$, cette au moins une machine électrique pouvant fournir une puissance électrique continue $W_{ElecCont}$ et une puissance électrique maximale pouvant être limitée aux phases de décollage et d'atterrissage $W_{ElecMax}$, et
- au moins deux rotors entraînés en rotation par l'installation motrice hybride.

Le vol de l'aéronef multirotor comporte une phase de décollage d'une durée $T_{Takeoff}$, une phase de croisière d'une durée $T_{Cruise}$ et une phase d'atterrissage d'une durée $T_{Landing}$. On entend par « phase de croisière » la phase de vol constituée par le vol de croisière.

Cet aéronef multirotor est caractérisé par une puissance de croisière $W_{Cruise}$ nécessaire à la réalisation d'une phase de croisière. Cette puissance de croisière $W_{Cruise}$ est notamment fonction des caractéristiques aérodynamiques de l'aéronef multirotor.

Ce procédé est remarquable en ce que la phase de décollage et la phase d'atterrissage sont réalisées uniquement en consommant une énergie électrique fournie par la source d'énergie électrique et que le procédé comporte les étapes suivantes :

- un premier calcul d'une énergie électrique de décollage $E_{TakeOff}$ consommée lors de la phase de décollage et égale à :

$$E_{\text{TakeOff}} = W_{\text{ElecMax}} . T_{\text{TakeOff}},$$

- un deuxième calcul d'une énergie électrique d'atterrissage $E_{Landing}$ consommée lors de la phase d'atterrissage et égale à:

$$E_{\text{Landing}} = W_{\text{ElecMax}} . T_{\text{Landing}},$$

- un troisième calcul d'une énergie électrique de croisière $E_{ElecCruise}$ disponible pour la phase de croisière et égale à :

$$E_{\text{ElecCruise}} = E_{\text{ElecTotal}} - W_{\text{ElecMax}} . \left( T_{\text{TakeOff}} + T_{\text{Landing}} \right),$$

avec $E_{ElecTotal}$ l'énergie électrique totale disponible dans la source d'énergie électrique avant le démarrage du vol de l'aéronef,

- un quatrième calcul d'une puissance électrique de croisière $W_{ElecCruise}$ disponible pour la phase de croisière et égale à :

$$W_{\text{ElecCruise}} = MIN \left( W_{\text{Cruise}} \; ; \; W_{ElecCont} \; ; \; \frac{E_{\text{ElecTotal}} - W_{\text{ElecMax}} . \left( T_{\text{TakeOff}} + T_{\text{Landing}} \right)}{T_{Cruise}} \right),$$

- une comparaison de la puissance électrique de croisière $W_{ElecCruise}$ et de la puissance de croisière $W_{Cruise}$, et
- une détermination d'une puissance thermique de croisière $W_{ThCruise}$ nécessaire pour la phase de croisière de sorte que :

  ◦ si $W_{\text{ElecCruise}} = W_{\text{Cruise}}$ ; $W_{\text{ThCruise}} = 0$, et
  ◦ si $W_{\text{ElecCruise}} < W_{\text{Cruise}}$ ; $W_{\text{ThCruise}} = W_{\text{Cruise}} - W_{\text{ElecCruise}}$.

Une source d'énergie thermique comporte par exemple au moins un moteur thermique. Une source d'énergie électrique comporte par exemple au moins un dispositif de stockage d'énergie électrique, tel qu'une batterie rechargeable ou non rechargeable, ou bien au moins une pile à combustible par exemple.

L'aéronef multirotor comporte de préférence au moins trois rotors assurant conjointement sa portance et sa propulsion. Un tel aéronef multirotor comporte par exemple trois, quatre, six, huit rotors. L'installation motrice hybride comporte alors de préférence au moins quatre machines électriques, chaque rotor de l'aéronef multirotor étant entraîné en rotation respectivement par une seule machine électrique remplissant uniquement une fonction motrice et formant de fait un moteur électrique. De la sorte, l'installation motrice comporte autant de moteurs électriques que de rotors.

L'installation comporte également une machine électrique, remplissant uniquement une fonction génératrice formant de fait un générateur électrique, et entraînée en rotation par la source d'énergie thermique afin de générer une énergie électrique.

Selon une variante, l'installation motrice hybride peut comporter une source d'énergie électrique, une source d'énergie thermique, au moins une machine électrique et une boîte de transmission principale de puissance. La boîte de transmission principale de puissance est entraînée conjointement par la source d'énergie thermique munie d'au moins un moteur thermique et par au moins une machine électrique et entraîne en rotation chaque rotor de l'aéronef multirotor. Une machine électrique peut être réversible ou bien être un générateur électrique afin de générer une énergie électrique lorsqu'elle est entraînée en rotation par la boîte de transmission principale de puissance ou bien par la source d'énergie thermique.

Par ailleurs, l'aéronef multirotor peut également comporter un rotor principal et un rotor anticouple, le rotor principal assurant la sustentation, voire la propulsion de l'aéronef. L'aéronef multirotor peut aussi comporter un rotor principal et deux rotors d'avancement assurant également la fonction anticouple.

Cet aéronef multirotor est adapté pour des missions de transport aérien, de préférence de courtes durées de l'ordre de quelques dizaines de minutes à une heure, en particulier dans des zones environnementales sensibles, telles que des villes ou bien des parcs nationaux par exemple.

Cet aéronef multirotor comporte également un calculateur ou bien un processeur pour mettre en œuvre le procédé selon l'invention ainsi qu'au moins une mémoire afin de stocker des instructions permettant de réaliser ce procédé et les caractéristiques de l'aéronef multirotor et celles de l'installation motrice hybride.

En outre, la source d'énergie électrique, à savoir chaque dispositif de stockage d'énergie électrique, et une machine électrique peuvent fournir pendant un temps limité de l'ordre de quelques minutes, typiquement trois minutes, la puissance électrique maximale $W_{ElecMax}$. Au-delà de ce temps limité, la source d'énergie électrique et la machine électrique doivent fournir une puissance électrique continue $W_{ElecCont}$ afin d'éviter des problèmes de surchauffe et/ou des dégradations de la machine électrique et/ou de la source d'énergie électrique. Une machine électrique est généralement dimensionnée pour fournir une puissance maximale compatible de la puissance nécessaire au décollage et à l'atterrissage de l'aéronef et supérieure à la puissance que peut délivrer la source d'énergie électrique.

Lorsque la source d'énergie électrique comporte plusieurs dispositifs de stockage d'énergie électrique, la puissance électrique continue fournie par l'installation motrice hybride est la somme des puissances électriques continues $W_{ElecCont}$ de ces dispositifs de stockage d'énergie électrique et la puissance électrique maximale fournie par l'installation motrice hybride est la somme des puissances électriques maximales $W_{ElecMax}$ de ces dispositifs de stockage d'énergie électrique.

L'utilisation uniquement de l'énergie électrique fournie par la source d'énergie électrique lors des phases de décollage et d'atterrissage permet avantageusement de réduire les nuisances sonores et de supprimer la pollution atmosphérique générée par l'aéronef multirotor. De plus, une source d'énergie électrique et un moteur électrique ne nécessitent pas d'atteindre une température de fonctionnement contrairement à un moteur thermique pour être sollicité à sa puissance maximale. De fait, la phase de décollage peut avantageusement être effectuée rapidement, sans attendre un temps de chauffe. La procédure de décollage est donc réduite vis-à-vis d'un aéronef utilisant un moteur thermique pour la phase de décollage et le temps gagné n'est pas négligeable par rapport à la courte durée de vol.

De plus, le troisième calcul de l'énergie électrique de croisière $E_{ElecCruise}$ disponible pour la phase de croisière et la comparaison de la puissance électrique de croisière $W_{ElecCruise}$ avec la puissance de croisière $W_{Cruise}$, permettent avantageusement de limiter l'utilisation de la source d'énergie thermique au juste nécessaire et, de fait, de limiter au strict minimum la pollution atmosphérique générée par l'aéronef multirotor. En outre, le procédé selon l'invention permet également de consommer au maximum l'énergie électrique de la source d'énergie électrique de l'installation motrice hybride.

La connaissance de l'utilisation de la source d'énergie thermique pendant le vol permet ainsi d'embarquer la juste quantité de carburant nécessaire à la source d'énergie thermique et d'augmenter en conséquence la charge utile de l'aéronef multirotor.

Enfin, si la puissance thermique de croisière $W_{ThCruise}$ nécessaire pour la phase de croisière est nulle, la source d'énergie thermique est inutile pour ce vol et peut donc être retirée au profit d'une charge utile plus élevée.

Par ailleurs, les phases de décollage et d'atterrissage sont les phases de vol les plus exigeantes lors du vol de l'aéronef multirotor. De fait, chaque machine électrique entraînant les rotors dans ces phases de décollage et d'atterrissage doit fonctionner de préférence avec la puissance électrique maximale $W_{ElecMax}$ fournie par la source d'énergie électrique pendant ces phases de décollage et d'atterrissage. En conséquence, chaque machine électrique est pilotée afin que la source d'énergie électrique fournisse sa puissance électrique maximale $W_{ElecMax}$ pendant les phases de décollage et d'atterrissage et sa puissance électrique continue $W_{ElecCont}$ pendant la phase de croisière.

Dès lors, la durée $T_{Takeoff}$ de la phase de décollage et la durée $T_{Landing}$ de la phase d'atterrissage étant définies, l'énergie électrique de décollage $E_{TakeOff}$ et l'énergie électrique d'atterrissage $E_{Landing}$ consommée respectivement lors de la phase de décollage et lors de la phase d'atterrissage sont calculées en fonction de la puissance électrique maximale $W_{ElecMax}$.

La source d'énergie électrique dispose d'une énergie électrique totale $E_{ElecTotal}$ avant le démarrage du vol de l'aéronef. L'énergie électrique de croisière $E_{ElecCruise}$ disponible pour la phase de croisière est alors égale à cette énergie électrique totale $E_{ElecTotal}$ à laquelle est retirée l'énergie électrique de décollage $E_{TakeOff}$ consommée lors de la phase de décollage ainsi que l'énergie électrique d'atterrissage $E_{Landing}$ qui sera consommée lors de la phase d'atterrissage :

$$E_{\mathrm{ElecCruise}} = E_{\mathrm{ElecTotal}} - E_{\mathrm{TakeOff}} - E_{\mathrm{Landing}} ,$$

soit

$$E_{\text{ElecCruise}} = E_{\text{ElecTotal}} - W_{\text{ElecMax}} \cdot \left(T_{\text{TakeOff}} + T_{\text{Landing}}\right).$$

La puissance maximale que peut délivrer l'installation motrice hydride en fonctionnant uniquement avec la source d'énergie électrique est alors le rapport entre l'énergie électrique de croisière $E_{ElecCruise}$ disponible et la durée $T_{Cruise}$ de la phase de croisière. Toutefois, l'installation motrice hybride ne doit pas fournir dans ce cas une puissance supérieure à la puissance électrique continue $W_{ElecCont}$. En conséquence, la puissance électrique de croisière $W_{ElecCruise}$ que peut fournir l'installation motrice hybride pour la phase de croisière est égale à la valeur minimale entre ce rapport de l'énergie électrique de croisière $E_{ElecCruise}$ disponible par la durée $T_{Cruise}$, la puissance électrique continue $W_{ElecCont}$ et la puissance de croisière $W_{Cruise}$ nécessaire à la réalisation de la phase de croisière telle que :

$$W_{\text{ElecCruise}} = MIN\left(W_{\text{Cruise}} ; W_{ElecCont} ; \frac{E_{\text{ElecCruise}}}{T_{Cruise}}\right),$$

soit

$$W_{\text{ElecCruise}} = MIN\left(W_{\text{Cruise}} ; W_{ElecCont} ; \frac{E_{\text{ElecTotal}} - W_{\text{ElecMax}} \cdot \left(T_{\text{TakeOff}} + T_{\text{Landing}}\right)}{T_{Cruise}}\right).$$

Enfin, en comparant cette puissance électrique de croisière $W_{ElecCruise}$ et la puissance de croisière $W_{Cruise}$ de l'aéronef multirotor, il est alors possible de déterminer si l'utilisation de la source d'énergie thermique est nécessaire pour fournir avec la source d'énergie électrique la puissance nécessaire à la phase de croisière ou bien si la source d'énergie électrique est suffisante.

Par ailleurs, le procédé selon l'invention peut comporter un cinquième calcul d'un taux d'électrification $R_{Elec}$ du vol de l'aéronef. Ce taux d'électrification $R_{Elec}$ correspond en fait au rapport de l'énergie électrique consommée au cours du vol par l'énergie totale consommée, à savoir la somme de l'énergie électrique et de l'énergie thermique consommée au cours du vol. De fait, si le vol est réalisé uniquement avec de l'énergie électrique fournie par la source d'énergie électrique, le taux d'électrification $R_{Elec}$ est égal à 1.

L'aéronef multirotor étant caractérisé par la puissance de croisière $W_{Cruise}$, une proportion entre cette puissance de croisière $W_{Cruise}$ et une puissance de décollage nécessaire au décollage de l'aéronef multirotor, à savoir la puissance électrique maximale $W_{ElecMax}$, est définie telle que $\lambda = \frac{W_{\text{Cruise}}}{W_{\text{ElecMax}}}$. Cette proportion A est une caractéristique de l'aéronef multirotor fonction de ses caractéristiques aérodynamiques et des caractéristiques de son installation motrice hybride.

Le taux d'électrification $R_{Elec}$ s'écrit alors :

$$R_{Elec} = \frac{T_{\text{TakeOff}} + T_{\text{Landing}} + MIN\left(\lambda ; \frac{W_{\text{ElecCont}}}{W_{\text{ElecMax}}} ; \frac{E_{\text{ElecTotal}} - W_{\text{ElecMax}} \cdot \left(T_{\text{TakeOff}} + T_{\text{Landing}}\right)}{T_{Cruise} \cdot W_{\text{ElecMax}}}\right) \cdot T_{Cruise}}{T_{\text{TakeOff}} + T_{\text{Landing}} + \lambda \cdot T_{Cruise}}.$$

En outre, le procédé selon l'invention peut prévoir une réserve opérationnelle d'énergie électrique. Cette réserve opérationnelle d'énergie électrique est constituée par une partie de l'énergie électrique totale $E_{ElecTotal}$ disponible de la source d'énergie électrique qui n'est pas prise en compte pour le vol proprement dit, mais préservée en cas de besoin. Ce besoin peut apparaître par exemple lors d'un déroutement de l'aéronef, la présence d'un vent contraire non anticipée ou encore un temps d'attente avant l'atterrissage.

Dans ce but, une réserve opérationnelle d'énergie électrique $E_{ElecReser}$ est par exemple déduite de l'énergie électrique totale $E_{ElecTotal}$ disponible afin de déterminer l'énergie électrique de croisière $E_{ElecCruise}$ disponible pour la phase de croisière. Dans ce cas, l'énergie électrique de croisière $E_{ElecCruise}$ est alors égale à l'énergie électrique totale $E_{ElecTotal}$ à laquelle est retirée l'énergie électrique de décollage $E_{TakeOff}$, l'énergie électrique d'atterrissage $E_{Landing}$ ainsi que cette réserve opérationnelle d'énergie électrique $E_{ElecReser}$ telle que :

$$E_{\text{ElecCruise}} = E_{\text{ElecTotal}} - E_{\text{TakeOff}} - E_{\text{Landing}} - E_{\text{ElecReser}},$$

soit

$$E_{\text{ElecCruise}} = E_{\text{ElecTotal}} - W_{\text{ElecMax}}.\left(T_{\text{TakeOff}} + T_{\text{Landing}}\right) - E_{\text{ElecReser}}.$$

Cette réserve opérationnelle d'énergie électrique ainsi préservée peut aussi être caractérisée par une durée $T_{Reser}$ d'une phase de réserve opérationnelle. Cette durée $T_{Reser}$ est ajoutée à la durée $T_{Cruise}$ de la phase de croisière lors du calcul de la puissance électrique de croisière $W_{ElecCruise}$ et du taux d'électrification $R_{Elec}$ du vol de l'aéronef tels que :

$$W_{\text{ElecCruise}} = MIN\left(W_{\text{Cruise}}\ ;\ W_{ElecCont}\ ;\ \frac{E_{\text{ElecTotal}} - W_{\text{ElecMax}}.\left(T_{\text{TakeOff}} + T_{\text{Landing}}\right)}{T_{Cruise} + T_{Reser}}\right),$$

et

$$R_{Elec} = \frac{T_{\text{TakeOff}} + T_{\text{Landing}} + MIN\left(\lambda\ ;\ \frac{W_{\text{ElecCont}}}{W_{\text{ElecMax}}}\ ;\ \frac{E_{\text{ElecTotal}} - W_{\text{ElecMax}}.\left(T_{\text{TakeOff}} + T_{\text{Landing}}\right)}{\left(T_{Cruise} + T_{Reser}\right).W_{\text{ElecMax}}}\right).T_{Cruise}}{T_{\text{TakeOff}} + T_{\text{Landing}} + \lambda.T_{Cruise}}.$$

Par ailleurs, la source d'énergie électrique comporte souvent un ou plusieurs dispositifs de stockage de l'énergie électrique, généralement formés respectivement par une batterie rechargeable ou non rechargeable. Une batterie est caractérisée par sa capacité énergétique $E_{Bat}$ égale à l'énergie électrique totale $E_{ElecTotal}$ disponible. Cette capacité énergétique $E_{Bat}$ est égale au produit de la densité d'énergie $DE_{Bat}$, exprimée en kiloWatt heure par kilogramme (kWh/kg), de la batterie par sa masse $M$ telle que :

$$E_{\text{Bat}} = DE_{\text{Bat}}.\text{M}.$$

De plus, la puissance électrique maximale $W_{ElecMax}$ que peut délivrer une batterie est égale au produit de la densité de puissance $DW_{Bat}$, exprimée en kiloWatt par kilogramme (kW/kg), de la batterie par sa masse $M$ telle que :

$$W_{\text{ElecMax}} = DW_{\text{Bat}}.\text{M}.$$

La puissance électrique continue $W_{ElecCont}$ de la batterie peut être définie proportionnellement à la puissance électrique maximale $W_{ElecMax}$ selon un coefficient d'utilisation continue $\left(K_{\text{CONT}}.\frac{DE_{Bat}}{DW_{Bat}}\right)$ strictement inférieur à 1, $K_{CONT}$ étant un taux de décharge en continu, de sorte que :

$$W_{ElecCont} = K_{CONT}.E_{Bat} = K_{CONT}.\frac{DE_{Bat}}{DW_{Bat}}.W_{\text{ElecMax}}.$$

Le taux de décharge en continu $K_{CONT}$ a pour unité l'inverse du temps et est défini tel que $K_{\text{CONT}} = \frac{1}{T_{CONT}}$, , $T_{CONT}$ étant la durée de décharge en continu exprimée en heure et par exemple de l'ordre de 1/3 heure. Le coefficient d'utilisation continue $\left(K_{\text{CONT}}.\frac{DE_{Bat}}{DW_{Bat}}\right)$ est alors supérieur à 0,3 et inférieur à 0,6.

En outre, afin de ne pas dégrader la batterie et de limiter son vieillissement, il est préférable de ne pas consommer la totalité de l'énergie électrique disponible dans la batterie Un niveau de profondeur de décharge supérieur ou égal à 10% est généralement utilisé. L'énergie électrique totale $E_{ElecTotal}$ disponible dans la batterie s'écrie alors $E_{ElecTotal} = k1.E_{Bat}$, $k1$ étant un coefficient d'utilisation normale strictement inférieur à 1, et par exemple supérieur à 0.5 et inférieur à 0.75.

En prenant en compte ces caractéristiques d'une batterie, la puissance électrique de croisière $W_{ElecCruise}$ et le taux d'électrification $R_{Elec}$ du vol de l'aéronef s'écrivent alors tels que :

$$W_{\text{ElecCruise}} = MIN\left(W_{\text{Cruise}} \; ; \; W_{ElecCont} \; ; \; \frac{E_{\text{ElecTotal}} - W_{\text{ElecMax}}.(T_{\text{TakeOff}} + T_{\text{Landing}})}{T_{Cruise} + T_{Reser}}\right),$$

et

$$R_{Elec} = \frac{T_{\text{TakeOff}} + T_{\text{Landing}} + MIN\left(\lambda \; ; \; K_{CONT}.\frac{DE_{BATT}}{DW_{BATT}} \; ; \; \frac{k1\frac{DE_{BATT}}{DW_{BATT}} - \left(T_{\text{TakeOff}} + T_{\text{Landing}}\right)}{T_{Cruise} + T_{Reser}}\right).T_{Cruise}}{T_{\text{TakeOff}} + T_{\text{Landing}} + \lambda.T_{Cruise}}.$$

En cas d'urgence et/ou de danger, et notamment lors d'une panne de la source d'énergie thermique se produisant pendant la phase de croisière ou bien la phase d'atterrissage, le coefficient d'utilisation normale $k1$ est remplacé par un coefficient d'urgence $k2$ strictement supérieur à $k1$. En effet, la marge utilisée en fonctionnement normal de l'aéronef multirotor afin de limiter le vieillissement de la batterie est réduite afin d'assurer la sécurité de l'aéronef multirotor. Il est évidemment préférable de permettre un atterrissage de l'aéronef en dégradant la batterie que de provoquer un crash de l'aéronef sous prétexte de préserver la batterie. L'énergie électrique totale $E_{ElecTotal}$ disponible dans la source d'énergie électrique est telle que $E_{\text{ElecTotal}} = k2.E_{Bat}$. Le coefficient d'urgence $k2$ est strictement inférieur à 1 et peut par exemple être strictement supérieur à 0.75.

De la sorte, une réserve exceptionnelle d'énergie électrique $E_{ElecExcep}$ est disponible pour pallier une telle panne de la source d'énergie thermique et permettre un fonctionnement totalement électrique de l'aéronef afin de poursuivre la croisière quelques minutes supplémentaires et/ou de réaliser l'atterrissage malgré cette panne. Cette réserve exceptionnelle d'énergie électrique $E_{ElecExcep}$ est telle que :

$$E_{\text{ElecExcep}} = (k2 - k1).E_{Bat} \,.$$

Enfin, lorsque la source d'énergie électrique comporte n dispositifs de stockage de l'énergie électrique, *n* étant un nombre entier supérieur ou égal à 1, l'énergie électrique totale $E_{ElecTotal}$ disponible dans la source d'énergie électrique est telle que :

$$E_{\text{ElecTotal}} = \sum_{i=1}^{n}(E_{Bat})_i \,,$$

avec *i* un entier positif variant de 1 à *n* et $(E_{Bat})_i$ la capacité énergétique d'un dispositif de stockage de rang *i*.

En prenant en compte un coefficient d'utilisation normale $k1$ identique pour chaque dispositif de stockage, l'énergie électrique totale $E_{ElecTotal}$ disponible dans la source d'énergie électrique est telle que :

$$E_{\text{ElecTotal}} = k1.\sum_{i=1}^{n}(E_{Bat})_i \,,$$

avec $k1$ le coefficient d'utilisation normale de la batterie strictement inférieur à 1.

En prenant en compte ces caractéristiques d'une batterie, la puissance électrique de croisière $W_{ElecCruise}$ et le taux d'électrification $R_{Elec}$ du vol de l'aéronef s'écrivent alors tel que :

$$W_{\text{ElecCruise}} = MIN\left(W_{Cruise} \; ; \; W_{ElecCont} \; ; \; \frac{E_{\text{ElecTotal}} - W_{\text{ElecMax}}.(T_{\text{TakeOff}} + T_{\text{Landing}})}{T_{Cruise} + T_{Reser}}\right),$$

et

$$R_{Elec} = \frac{T_{\text{TakeOff}}+T_{\text{Landing}}+MIN\left(\lambda\ ;\ K_{CONT}\cdot\sum_{i=1}^{n}\left(\frac{DE_{BATT}}{DW_{BATT}}\right)_i\ ;\ \dfrac{k1\sum_{i=1}^{n}\left(\frac{DE_{BATT}}{DW_{BATT}}\right)_i-\left(T_{\text{TakeOff}}+T_{\text{Landing}}\right)}{T_{Cruise}+T_{Reser}}\right).T_{Cruise}}{T_{\text{TakeOff}}+T_{\text{Landing}}+\lambda.T_{Cruise}}.$$

En cas d'urgence et/ou de danger, le coefficient d'utilisation normale *k1* est remplacé comme évoqué précédemment par le coefficient d'urgence *k2* strictement supérieur à *k1*. L'énergie électrique totale $E_{ElecTotal}$ disponible dans la source d'énergie électrique est alors telle que :

$$E_{\text{ElecTotal}} = k2.\sum_{i=1}^{n}(E_{Bat})_i\ .$$

La présente invention a également pour objet un aéronef multirotor tel que précédemment décrit et comportant un dispositif de gestion de l'énergie de l'installation motrice hybride de l'aéronef multirotor afin de mettre en œuvre le procédé précédemment décrit et de déterminer notamment le taux d'électrification $R_{Elec}$ du vol et si l'utilisation de la source d'énergie thermique est nécessaire ou non.

Le dispositif de gestion de l'énergie de l'installation motrice hybride de l'aéronef multirotor comporte notamment un calculateur ou bien un processeur pour mettre en œuvre le procédé précédemment décrit ainsi qu'au moins une mémoire afin de stocker les caractéristiques de l'aéronef multirotor et celles de son installation motrice hybride.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé de gestion de l'énergie d'une installation motrice hybride d'un aéronef multirotor, et

- les figures 2 et 3, deux aéronefs multirotor équipés d'un dispositif de gestion de l'énergie d'une installation motrice hybride de l'aéronef multirotor.

Les éléments présents dans plusieurs figures distinctes sont affectés d'une seule et même référence.

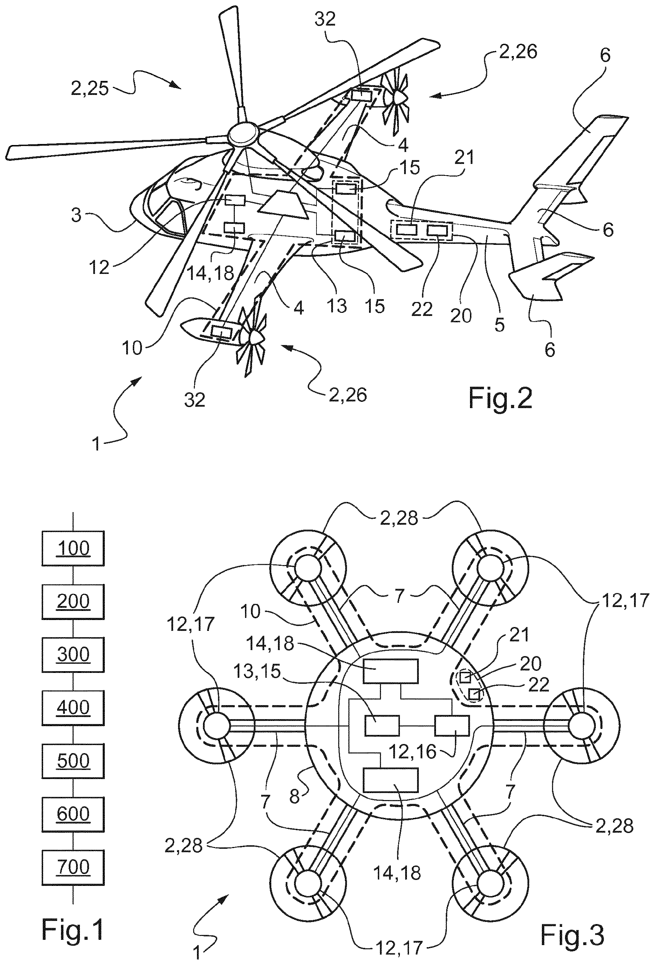

La figure 1 décrit un schéma synoptique d'un procédé de gestion de l'énergie de l'installation motrice hybride d'un aéronef 1 multirotor. Les figures 2 et 3 décrivent deux exemples d'un aéronef 1 multirotor équipé d'une installation motrice hybride 10 et d'un dispositif 20 de gestion de l'énergie de l'installation motrice hybride 10 de l'aéronef 1 multirotor.

Ce procédé et ce dispositif 20 permettent de déterminer et, par suite, d'optimiser la répartition de la consommation des énergies de l'installation motrice hybride 10 de l'aéronef 1 multirotor sur un vol complet.

De façon commune à ces deux exemples, un aéronef 1 multirotor comporte une installation motrice hybride 10, un dispositif 20 de gestion de l'énergie de l'installation motrice hybride 10 et plusieurs rotors 2 entraînés en rotation par cette installation motrice hybride 10. L'installation motrice hybride 10 comporte au moins un moteur thermique 15 constituant une source d'énergie thermique 13, au moins un dispositif de stockage 18 d'énergie électrique constituant une source d'énergie électrique 14 et au moins une machine électrique 12. Le dispositif 20 de gestion de l'énergie de l'installation motrice hybride 10 comporte un calculateur 21 et une mémoire 22.

Le premier exemple d'aéronef 1 multirotor représenté sur la figure 2 comporte également un fuselage 3, deux ailes 4 de part et d'autre du fuselage 3 et une poutre de queue 5 portant des empennages 6. Ce premier exemple d'aéronef 1 multirotor comporte trois rotors 2 formés d'une part par un rotor principal 25 positionné au dessus du fuselage 3 et d'autre part par deux hélices propulsives 26 positionnées à l'extrémité de chaque aile 4.

L'installation motrice hybride 10 de ce premier exemple d'aéronef 1 multirotor comporte plus précisément deux moteurs thermiques 15 formant la source d'énergie thermique 13, un dispositif de stockage 18 d'énergie électrique constituant la source d'énergie électrique 14, une machine électrique 12 réversible, ayant une fonction motrice et une fonction génératrice d'électricité, et une chaîne de transmission mécanique de puissance 30. La chaîne de transmission mécanique de puissance 30 permet de transmettre l'énergie fournie par les moteurs thermiques 15 et la machine électrique 12 au rotor principal 2,25 et aux hélices propulsives 2,26.

La chaîne de transmission mécanique de puissance 30 comporte une boîte de transmission principale de puissance 31 et deux boîtes de transmission auxiliaire de puissance 32. La boîte de transmission principale de puissance 31 est entraînée en rotation par les moteurs thermiques 15 et par la machine électrique 12 en fonction motrice et entraîne en rotation le rotor principal 2,25 ainsi que les deux boîtes de transmission auxiliaire de puissance 32. Chaque boîte de transmission auxiliaire de puissance 32 entraîne alors en rotation respectivement une hélice propulsives 2,26. La boîte de transmission principale de puissance 31 peut également entraîner en rotation la machine électrique 12 en fonction génératrice afin de fournir de l'énergie électrique qui peut être stockée dans le dispositif de stockage 18.

Le second exemple d'aéronef 1 multirotor représenté sur la figure 3 comporte six rotors 2, chacun de ces six rotors 2 constituant chacun un rotor de sustentation et de propulsion 28, une partie centrale 8 et six bras 7 fixés à la partie centrale 8 et portant à leur extrémité respectivement un rotor 2,28.

L'installation motrice hybride 10 de ce second exemple d'aéronef 1 multirotor comporte plus précisément un moteur thermique 15 formant la source d'énergie thermique 13, deux dispositifs de stockage 18 d'énergie électrique constituant la source d'énergie électrique 14 et sept machines électriques 12 se décomposant en d'une part un générateur électrique 16 entraîné par le moteur thermique 15 et d'autre part six moteurs électriques 17, chacun de ces moteurs électriques 17 entraînant un rotor 2,28 distinct. Les six moteurs électriques 17 et le générateur électrique 16 sont reliés électriquement à la source d'énergie électrique 14.

Le procédé de gestion de l'énergie de l'installation motrice hybride 10 d'un aéronef 1 multirotor dont le schéma synoptique est représenté sur la figure 1 peut être mis en œuvre par le dispositif 20 que comportent ces deux exemples d'aéronef 1 multirotor. Ce procédé comporte sept étapes et permet de déterminer et, par suite, d'optimiser, la répartition de la consommation des énergies électriques et thermiques de l'installation motrice hybride 10 de l'aéronef 1 multirotor sur un vol complet afin, entre autres, de limiter les nuisances sonores et polluantes de ce vol pour l'environnement. Un tel vol complet de l'aéronef 1 multirotor comporte une phase de décollage pendant une durée $T_{Takeoff}$, une phase de croisière pendant une durée $T_{Cruise}$ et une phase d'atterrissage pendant une durée $T_{Landing}$.

Avantageusement, la phase de décollage et la phase d'atterrissage sont réalisées uniquement en consommant une énergie électrique fournie par la source d'énergie électrique 14, les rotors 2 étant entraînés uniquement par les machines électriques 12. De la sorte, les nuisances sonores de l'aéronef 1 multirotor sont limitées aux bruits générés par la rotation des rotors 2 et les pollutions de l'atmosphère généralement provoquées par un moteur thermique 15 sont supprimées pendant ces phases de décollage et d'atterrissage.

L'installation motrice hybride 10 comporte des caractéristiques définissant les puissances qu'elle est susceptible de fournir. L'installation motrice hybride 10 peut fournir une puissance thermique continue $W_{Th}$ en utilisant uniquement la source d'énergie thermique 13. L'installation motrice hybride 10 peut fournir une puissance électrique maximale $W_{ElecMax}$ pendant une durée limitée et une puissance électrique continue $W_{ElecCont}$ de façon continue en utilisant uniquement la source d'énergie électrique 14 alimentant chaque machine électrique 12.

De plus, l'aéronef 1 multirotor a une puissance de croisière $W_{Cruise}$ nécessaire à la réalisation d'une phase de croisière.

Les caractéristiques de l'aéronef 1 multirotor et celles de l'installation motrice hybride 10 sont stockées dans la mémoire 22 ainsi que des instructions afin de réaliser le procédé de gestion de l'énergie de l'installation motrice hybride 10.

Au cours d'un premier calcul 100, une énergie électrique de décollage $E_{TakeOff}$ consommée lors de la phase de décollage est déterminée. Cette énergie électrique de décollage $E_{TakeOff}$ est telle que :

$$E_{\mathrm{TakeOff}} = W_{\mathrm{ElecMax}}.T_{\mathrm{TakeOff}}.$$

Au cours d'un deuxième calcul 200, une énergie électrique d'atterrissage $E_{Landing}$ consommée lors de la phase d'atterrissage est déterminée. Cette énergie électrique d'atterrissage $E_{Landing}$ est telle que :

$$E_{\mathrm{Landing}} = W_{\mathrm{ElecMax}}.T_{\mathrm{Landing}}.$$

Le premier calcul 100 et le deuxième calcul 200 peuvent être réalisés de façon simultanée ou bien de façon séquentielle.

Ensuite, au cours d'un troisième calcul 300, une énergie électrique de croisière $E_{ElecCruise}$ disponible pour la phase de croisière est déterminée en soustrayant l'énergie électrique de décollage $E_{TakeOff}$ et l'énergie électrique d'atterrissage $E_{Landing}$ à l'énergie électrique totale $E_{ElecTotal}$ disponible dans la source d'énergie électrique 14 avant le démarrage du vol de l'aéronef 1. L'énergie électrique de croisière $E_{ElecCruise}$ est telle que :

$$E_{\mathrm{ElecCruise}} = E_{\mathrm{ElecTotal}} - W_{\mathrm{ElecMax}}.\left(T_{\mathrm{TakeOff}} + T_{\mathrm{Landing}}\right).$$

En outre, une réserve opérationnelle d'énergie électrique $E_{ElecReser}$ peut également être soustraite de l'énergie électrique totale $E_{ElecTotal}$ afin de déterminer l'énergie électrique de croisière $E_{ElecCruise}$ disponible pour la phase de croisière. Cette réserve opérationnelle d'énergie électrique $E_{ElecReser}$ permet d'anticiper un éventuel incident pouvant se produire pendant la phase de croisière ou bien la phase d'atterrissage. Un incident peut être une panne d'un moteur thermique 15 de la source d'énergie thermique 13 pendant la phase de croisière ou bien une interruption de la phase d'atterrissage ou encore un changement du lieu d'atterrissage.

Cette réserve opérationnelle d'énergie électrique $E_{ElecReser}$ s'ajoute alors à la partie de l'énergie électrique de la source d'énergie électrique 14 non encore consommée afin que l'aéronef 1 multirotor puisse atterrir en sécurité. L'énergie électrique de croisière $E_{ElecCruise}$ est alors telle que :

$$E_{\mathrm{ElecCruise}} = E_{\mathrm{ElecTotal}} - E_{\mathrm{TakeOff}} - E_{\mathrm{Landing}} - E_{\mathrm{ElecReser}} \text{ ,}$$

soit

$$E_{\mathrm{ElecCruise}} = E_{\mathrm{ElecTotal}} - W_{\mathrm{ElecMax}} \cdot \left( T_{\mathrm{TakeOff}} + T_{\mathrm{Landing}} \right) - E_{\mathrm{ElecReser}} \text{ .}$$

Au cours d'un quatrième calcul 400, une puissance électrique de croisière $W_{ElecCruise}$ que peut fournir l'installation motrice hybride 10 pour la phase de croisière est déterminée. Cette puissance électrique de croisière $W_{ElecCruise}$ est limitée par la capacité de chaque machine électrique 12 à fournir une puissance de façon continue. De la sorte, cette puissance électrique de croisière $W_{ElecCruise}$ est égale à la valeur minimale entre ce rapport de l'énergie électrique de croisière $E_{ElecCruise}$ disponible par la durée $T_{Cruise}$, la puissance électrique continue $W_{ElecCont}$ et la puissance de croisière $W_{Cruise}$ nécessaire à la réalisation d'une phase de croisière telle que :

$$W_{\mathrm{ElecCruise}} = \mathrm{MIN} \left( W_{\mathrm{Cruise}} \text{ ; } W_{ElecCont} \text{ ; } \frac{E_{\mathrm{ElecCruise}}}{T_{Cruise}} \right),$$

soit

$$W_{\mathrm{ElecCruise}} = MIN \left( W_{\mathrm{Cruise}} \text{ ; } W_{ElecCont} \text{ ; } \frac{E_{\mathrm{ElecTotal}} - W_{\mathrm{ElecMax}} \cdot (T_{\mathrm{TakeOff}} + T_{\mathrm{Landing}}) - E_{\mathrm{ElecReser}}}{T_{Cruise}} \right).$$

La réserve opérationnelle d'énergie électrique $E_{ElecReser}$ évoquée précédemment peut également être prise en compte pour le calcul de cette puissance électrique de croisière $W_{ElecCruise}$ et alors non déduite de l'énergie électrique totale $E_{ElecTotal}$. Cette réserve opérationnelle d'énergie électrique $E_{ElecReser}$ peut être caractérisée par une durée $T_{Reser}$ d'une phase de réserve opérationnelle. Cette durée $T_{Reser}$ est ajoutée à la durée $T_{Cruise}$ de la phase de croisière lors du calcul de la puissance électrique de croisière $W_{ElecCruise}$ telle que :

$$W_{\mathrm{ElecCruise}} = MIN \left( W_{\mathrm{Cruise}} \text{ ; } W_{ElecCont} \text{ ; } \frac{E_{\mathrm{ElecTotal}} - W_{\mathrm{ElecMax}} \cdot (T_{\mathrm{TakeOff}} + T_{\mathrm{Landing}})}{T_{Cruise} + T_{Reser}} \right).$$

Au cours d'une comparaison 500, la puissance électrique de croisière $W_{ElecCruise}$ est comparée avec la puissance de croisière $W_{Cruise}$, cette puissance de croisière $W_{Cruise}$ étant fonction des caractéristiques aérodynamiques de l'aéronef 1 multirotor.

Au cours d'une détermination 600, une puissance thermique de croisière $W_{ThCruise}$ nécessaire pour la phase de croisière est déterminée suite à la comparaison 500.

Si la puissance électrique de croisière $W_{ElecCruise}$ est égale à la puissance de croisière $W_{Cruise}$, la puissance thermique de croisière $W_{ThCruise}$ nécessaire pour la phase de croisière est nulle et l'ensemble du vol de l'aéronef 1 multirotor, y compris la phase de croisière, est réalisée en utilisant uniquement l'énergie électrique contenue dans la source d'énergie électrique 14.

A contrario, si la puissance électrique de croisière $W_{ElecCruise}$ est inférieure à la puissance de croisière $W_{Cruise}$, la puissance thermique de croisière $W_{ThCruise}$ nécessaire pour la phase de croisière est non nulle. En conséquence, l'énergie électrique contenu dans la source d'énergie électrique 14 est insuffisante pour permettre seule la réalisation de l'ensemble du vol de l'aéronef 1 multirotor. La source d'énergie thermique 13 doit donc être utilisée uniquement pendant la phase de croisière, de sorte à limiter les nuisances générées par cette source d'énergie thermique 13 à cette phase de croisière se situant en altitude et donc au plus loin possible des zones habitées. La puissance thermique de croisière $W_{ThCruise}$ est telle que :

$$W_{\text{ThCruise}} = W_{\text{Cruise}} - W_{\text{ElecCruise}},$$

soit

$$W_{\text{ThCruise}} = W_{\text{Cruise}} - MIN\left(W_{\text{Cruise}} \; ; \; W_{ElecCont} \; ; \; \frac{E_{\text{ElecTotal}} - W_{\text{ElecMax}} \cdot \left(T_{\text{TakeOff}} + T_{\text{Landing}}\right)}{T_{Cruise}}\right).$$

Au cours d'un cinquième calcul 700, un taux d'électrification $R_{Elec}$ du vol de l'aéronef 1 multirotor est déterminé. Ce taux d'électrification $R_{Elec}$ du vol est calculé en fonction des énergies électriques et thermiques consommées lors du vol et est égale au rapport de l'énergie électrique consommée au cours du vol par l'énergie totale consommée par l'installation motrice hybride 10 pendant ce vol. Ce taux d'électrification $R_{Elec}$ du vol est tel que :

$$R_{Elec} = \frac{T_{\text{TakeOff}} + T_{\text{Landing}} + MIN\left(\lambda \; ; \frac{W_{ElecCont}}{W_{\text{ElecMax}}} ; \frac{E_{\text{ElecTotal}} - W_{\text{ElecMax}} \cdot \left(T_{\text{TakeOff}} + T_{\text{Landing}}\right)}{T_{Cruise} \cdot W_{\text{ElecMax}}}\right) \cdot T_{Cruise}}{T_{\text{TakeOff}} + T_{\text{Landing}} + \lambda \cdot T_{Cruise}}.$$

avec $\lambda$, la proportion entre la puissance de croisière $W_{Cruise}$ et la puissance électrique maximale $W_{ElecMax}$, utilisée pour la phase de décollage, telle que $\lambda = \frac{W_{\text{Cruise}}}{W_{\text{ElecMax}}}$.

De fait, le taux d'électrification $R_{Elec}$ permet de savoir si l'utilisation de la source d'énergie thermique est nécessaire ou non pour la réalisation du vol ainsi que la proportion d'énergie thermique nécessaire. Il est ensuite possible d'en déduire la quantité de carburant nécessaire pour la réalisation du vol. En particulier, si le taux d'électrification $R_{Elec}$ est égal à 1, le vol de l'aéronef 1 multirotor est réalisé uniquement avec de l'énergie électrique fournie par la source d'énergie électrique.

Si une phase de réserve opérationnelle d'une durée $T_{Reser}$ est prise en compte pour le calcul de la puissance électrique de croisière $W_{ElecCruise}$, le taux d'électrification $R_{Elec}$ du vol est tel que :

$$R_{Elec} = \frac{T_{\text{TakeOff}} + T_{\text{Landing}} + MIN\left(\lambda \; ; \frac{W_{ElecCont}}{W_{\text{ElecMax}}} ; \frac{E_{\text{ElecTotal}} - W_{\text{ElecMax}} \cdot \left(T_{\text{TakeOff}} + T_{\text{Landing}}\right)}{\left(T_{Cruise} + T_{Reser}\right) \cdot W_{\text{ElecMax}}}\right) \cdot T_{Cruise}}{T_{\text{TakeOff}} + T_{\text{Landing}} + \lambda \cdot T_{Cruise}}.$$

## Revendications

1. Procédé de gestion de l'énergie d'une installation motrice hybride (10) d'un aéronef (1) multirotor lors d'un vol, ledit aéronef (1) multirotor comportant :

   - une installation motrice hybride (10) munie d'une source d'énergie thermique (13), d'une source d'énergie électrique (14) et d'au moins une machine électrique (12), ladite source d'énergie thermique (13) pouvant fournir une puissance thermique continue $W_{Th}$, ladite au moins une machine électrique (12) pouvant fournir une puissance électrique continue $W_{ElecCont}$ et une puissance électrique maximale $W_{ElecMax}$, et
   - au moins deux rotors (2) entraînés en rotation par ladite installation motrice hybride (10), ledit vol comportant une phase de décollage d'une durée $T_{Takeoff}$, une phase de croisière d'une durée $T_{Cruise}$ et une phase d'atterrissage d'une durée $T_{Landing}$, ledit aéronef (1) multirotor ayant une puissance de croisière $W_{Cruise}$ nécessaire à la réalisation d'une phase de croisière,

   ladite phase de décollage et ladite phase d'atterrissage étant réalisées uniquement en consommant une énergie électrique fournie par ladite source d'énergie électrique (14), **caractérisé en ce que** ledit procédé comporte les étapes suivantes :

- un premier calcul (100) d'une énergie électrique de décollage $E_{TakeOff}$ consommée lors de la phase de décollage et égale à :

$$E_{\mathrm{TakeOff}} = W_{\mathrm{ElecMax}} \cdot T_{\mathrm{TakeOff}},$$

- un deuxième calcul (200) d'une énergie électrique d'atterrissage $E_{Landing}$ consommée lors de la phase d'atterrissage et égale à :

$$E_{\mathrm{Landing}} = W_{\mathrm{ElecMax}} \cdot T_{\mathrm{Landing}},$$

- un troisième calcul (300) d'une énergie électrique de croisière $E_{ElecCruise}$ disponible pour ladite phase de croisière et égale à :

$$E_{\mathrm{ElecCruise}} = E_{\mathrm{ElecTotal}} - W_{\mathrm{ElecMax}} \cdot \left( T_{\mathrm{TakeOff}} + T_{\mathrm{Landing}} \right),$$

avec $E_{ElecTotal}$ une énergie électrique totale disponible dans ladite source d'énergie électrique (14) avant le démarrage dudit vol dudit aéronef (1),
- un quatrième calcul (400) d'une puissance électrique de croisière $W_{ElecCruise}$ disponible pour ladite phase de croisière et égale à :

$$W_{\mathrm{ElecCruise}} = MIN\left( W_{\mathrm{Cruise}} \; ; \; W_{ElecCont} \; ; \; \frac{E_{\mathrm{ElecTotal}} - W_{\mathrm{ElecMax}} \cdot \left( T_{\mathrm{TakeOff}} + T_{\mathrm{Landing}} \right)}{T_{Cruise}} \right),$$

- une comparaison (500) de ladite puissance électrique de croisière $W_{ElecCruise}$ et de ladite puissance de croisière $W_{Cruise}$, et
- une détermination (600) d'une puissance thermique de croisière $W_{ThCruise}$ nécessaire pour ladite phase de croisière de sorte que :

   ◦ si $W_{\mathrm{ElecCruise}} = W_{\mathrm{Cruise}}$ ; $W_{\mathrm{ThCruise}} = 0$, et
   ◦ si $W_{\mathrm{ElecCruise}} < W_{\mathrm{Cruise}}$ ; $W_{\mathrm{ThCruise}} = W_{\mathrm{Cruise}} - W_{\mathrm{ElecCruise}}$.

**2.** Procédé selon la revendication 1,
   **caractérisé en ce que** ledit procédé comporte un cinquième calcul (700) d'un taux d'électrification $R_{Elec}$ dudit vol dudit aéronef (1) tel que :

$$R_{Elec} = \frac{T_{\mathrm{TakeOff}} + T_{\mathrm{Landing}} + MIN\left( \lambda \; ; \; \frac{W_{ElecCont}}{W_{\mathrm{ElecMax}}} \; ; \; \frac{E_{\mathrm{ElecTotal}} - W_{\mathrm{ElecMax}} \cdot \left( T_{\mathrm{TakeOff}} + T_{\mathrm{Landing}} \right)}{T_{Cruise} \cdot W_{\mathrm{ElecMax}}} \right) \cdot T_{Cruise}}{T_{\mathrm{TakeOff}} + T_{\mathrm{Landing}} + \lambda \cdot T_{Cruise}},$$

avec $\lambda$, la proportion entre ladite puissance de croisière nécessaire à la croisière et une puissance de décollage nécessaire au décollage, à savoir ladite puissance électrique maximale $W_{ElecMax}$, dudit aéronef (1) telle que

$$\lambda = \frac{W_{\mathrm{Cruise}}}{W_{\mathrm{ElecMax}}}.$$

**3.** Procédé selon la revendication 1,
   **caractérisé en ce que** ledit vol comporte une phase de réserve opérationnelle d'une durée $T_{Reser}$, de sorte que ladite puissance électrique de croisière $W_{ElecCruise}$ est égale à :

$$W_{\mathrm{ElecCruise}} = MIN\left( W_{\mathrm{Cruise}} \; ; \; W_{ElecCont} \; ; \; \frac{E_{\mathrm{ElecTotal}} - W_{\mathrm{EleMax}} \cdot \left( T_{\mathrm{TakeOff}} + T_{\mathrm{Landing}} \right)}{T_{Cruise} + T_{Reser}} \right).$$

4.  Procédé selon la revendication 2,
    **caractérisé en ce que** ledit vol comporte une phase de réserve opérationnelle d'une durée $T_{Reser}$, de sorte que ladite puissance électrique de croisière $W_{ElecCruise}$ est égale à :

$$W_{ElecCruise} = MIN\left(W_{Cruise} ; W_{ElecCont} ; \frac{E_{ElecTotal} - W_{ElecMax} \cdot (T_{TakeOff} + T_{Landing})}{T_{Cruise} + T_{Reser}}\right),$$

et que ledit taux d'électrification $R_{Elec}$ dudit vol dudit aéronef (1) est tel que :

$$R_{Elec} = \frac{T_{TakeOff} + T_{Landing} + MIN\left(\lambda ; \frac{W_{ElecCont}}{W_{ElecMax}} ; \frac{E_{ElecTotal} - W_{ElecMax} \cdot (T_{TakeOff} + T_{Landing})}{(T_{Cruise} + T_{Reser}) \cdot W_{ElecMax}}\right) \cdot T_{Cruise}}{T_{TakeOff} + T_{Landing} + \lambda \cdot T_{Cruise}}.$$

5.  Procédé selon l'une quelconque des revendications 1 à 2,
    **caractérisé en ce qu'**une réserve opérationnelle d'énergie $E_{ElecReser}$ est déduite de ladite énergie électrique totale $E_{ElecTotal}$ disponible.

6.  Procédé selon l'une quelconque des revendications 1 à 5,
    **caractérisé en ce que**, ladite source d'énergie électrique (14) comportant $n$ dispositif(s) de stockage (18), $n$ étant un nombre entier supérieur ou égal à 1, ladite énergie électrique totale $E_{ElecTotal}$ disponible dans ladite source d'énergie électrique (14) est telle que :

$$E_{ElecTotal} = \sum_{i=1}^{n} (E_{Bat})_i,$$

avec $i$ un nombre entier positif variant de 1 à $n$ et $(E_{bat})i$ la capacité énergétique d'un dispositif de stockage (18) de rang $i$.

7.  Procédé selon l'une quelconque des revendications 1 à 5,
    **caractérisé en ce que** ladite source d'énergie électrique (14) comportant $n$ dispositif(s) de stockage (18), $n$ étant un nombre entier supérieur ou égal à 1, ladite énergie électrique totale $E_{ElecTotal}$ disponible dans ladite source d'énergie électrique (14) est telle que :

$$E_{ElecTotal} = k1 \cdot \sum_{i=1}^{n} (E_{Bat})_i,$$

avec $i$ un nombre entier positif variant de 1 à $n$, $(E_{bat})i$ la capacité énergétique d'un dispositif de stockage (18) de rang $i$ et $k1$ étant un coefficient d'utilisation normale de la batterie strictement inférieur à 1.

8.  Procédé selon la revendication 7,
    **caractérisé en ce qu'**en cas d'urgence et/ou de danger, ledit coefficient d'utilisation normale $k1$ est remplacé par un coefficient d'urgence $k2$ strictement supérieur à $k1$ et strictement inférieur à 1.

9.  Procédé selon l'une quelconque des revendications 1 à 8,
    **caractérisé en ce que** ladite source d'énergie thermique (13) comportant au moins un moteur thermique (15), ladite installation motrice hybride (10) comporte une boîte de transmission principale de puissance (31) entraînant en rotation lesdits rotors (2), ledit au moins un moteur thermique (15) et ladite au moins une machine électrique (12) entraînant en rotation ladite boîte de transmission principale de puissance (31).

10. Procédé selon la revendication 9,
    **caractérisé en ce que** ladite installation motrice hybride (10) comporte un générateur électrique (12,16) entraîné en rotation par ladite boîte de transmission principale de puissance (31) ou bien directement par au moins un moteur thermique (15).

11. Procédé selon l'une quelconque des revendications 1 à 8,

**caractérisé en ce que** ladite source d'énergie thermique (13) comportant au moins un moteur thermique (15), ladite installation motrice hybride (10) comporte un générateur électrique (12,16) et autant de moteurs électriques (12,17) que de rotors (2), un rotor (2) étant entraîné en rotation par un seul moteur électrique (12), ledit générateur électrique (16) étant entraîné en rotation par ledit au moins un moteur thermique (15).

12. Aéronef (1) multirotor comportant :

- une installation motrice hybride (10) munie une source d'énergie thermique (13), une source d'énergie électrique (14) et au moins une machine électrique (12), ladite source d'énergie thermique (13) pouvant fournir une puissance thermique continue $W_{Th}$, ladite au moins une machine électrique (12) pouvant fournir une puissance électrique continue $W_{ElecCont}$ et une puissance électrique maximale $W_{ElecMax}$, et
- au moins deux rotors (2) entraînés en rotation par ladite installation motrice hybride (10),

**caractérisé en ce que** ledit aéronef (1) comporte un dispositif (20) de gestion de l'énergie de ladite installation motrice hybride (10) muni d'un calculateur (21) et d'au moins une mémoire (22) afin de mettre en œuvre le procédé selon les revendications 1 à 11.

**Patentansprüche**

1. Verfahren zum Energie-Management einer Hybrid-Triebwerksanlage (10) eines Multirotor-Luftfahrzeugs (1) beim Flug, wobei das Multirotor-Luftfahrzeug (1) umfasst:

eine Hybrid-Triebwerksanlage (10), die mit einer Quelle (13) für Wärmeenergie, einer Quelle (14) für elektrische Energie und mindestens einer elektrischen Maschine (12) ausgerüstet ist, wobei die Quelle (13) für Wärmeenergie eine kontinuierliche thermische Leistung $W_{th}$ liefern kann, wobei die mindestens eine elektrische Maschine (12) eine kontinuierliche elektrische Leistung $W_{ElecCont}$ und eine maximale elektrische Leistung $W_{ElecMax}$ liefern kann, und;
mindestens zwei Rotoren (2), die durch die Hybrid-Triebwerksanlage (10) in Rotation angetrieben werden, wobei der Flug eine Startphase einer Dauer $T_{Trakeoff}$, eine Flugphase einer Dauer $T_{Cruise}$ und eine Landephase einer Dauer $T_{Landing}$ umfasst, wobei das Multirotor-Luftfahrzeug (1) eine Flug-Leistung $W_{Cruise}$ besitzt, die zur Durchführung einer Flugphase erforderlich ist, wobei die Startphase und die Landephase lediglich unter Verbrauch einer elektrischen Energie erfolgen, die durch die Quelle (14) für elektrische Energie geliefert wird, **dadurch gekennzeichnet, dass** das Verfahren die folgenden Stufen umfasst:

- eine erste Berechnung (100) einer elektrischen Start-Energie $E_{Takeoff}$, die bei der Startphase verbraucht wird und gleich

$$E_{\text{TakeOff}} = W_{\text{ElecMax}}.T_{\text{TakeOff}}$$

ist,
- eine zweite Berechnung (200) einer elektrischen Lande-Energie $E_{Landing}$, die bei der Landephase verbraucht wird und gleich

$$E_{\text{Landing}} = W_{\text{ElecMax}}.T_{\text{Landing}}$$

ist,
- eine dritte Berechnung (300) einer elektrischen Flug-Energie $E_{ElecCruise}$, die für die Flugphase verfügbar ist und gleich

$$E_{\text{ElecCruise}} = E_{\text{ElecTotal}} - W_{\text{ElecMax}}.\left(T_{\text{TakeOff}} + T_{\text{Landing}}\right)$$

ist, wobei $E_{ElecTotal}$ eine gesamte elektrische Energie ist, die in der Quelle (14) für elektrische Energie vor Beginn des Fluges des Luftfahrzeugs (1) verfügbar ist,

- eine vierte Berechnung (400) einer elektrischen Flug-Leistung $W_{ElecCruise}$, die für die Flugphase verfügbar ist und gleich

$$W_{\text{ElecCruise}} = MIN\left(W_{\text{Cruise}} ; W_{ElecCont} ; \frac{E_{\text{ElecTotal}} - W_{\text{ElecMax}} \cdot (T_{\text{TakeOff}} + T_{\text{Landing}})}{T_{Cruise}}\right)$$

ist,
- ein Vergleichen (500) der elektrischen Flug-Leistung $W_{ElecCruise}$ und der Flug-Leistung $W_{Cruise}$ sowie
- ein Bestimmen (600) einer thermischen Flug-Leistung $W_{ThCruise}$, die für die Flugphase erforderlich ist, derart, dass,

 • wenn $W_{ElecCruise} = W_{Cruise}$ ist, $W_{ThCruise}=0$ ist, Und
 • wenn $W_{ElecCruise} < W_{Cruise}$ ist, $W_{ThCruise}= W_{Cruise}- W_{ElecCruise}$ ist.

2.  Verfahren nach Anspruch 1,
 **dadurch gekennzeichnet, dass** das Verfahren eine fünfte Berechnung (700) einer Elektrifizierungsrate $R_{Elec}$ des Fluges des Luftfahrzeugs (1) umfasst gemäß

$$R_{Elec} = \frac{T_{\text{TakeOff}} + T_{\text{Landing}} + MIN\left(\lambda ; \frac{W_{ElecCont}}{W_{\text{ElecMax}}} ; \frac{E_{\text{ElecTotal}} - W_{\text{ElecMax}} \cdot (T_{\text{TakeOff}} + T_{\text{Landing}})}{T_{Cruise} \cdot W_{\text{ElecMax}}}\right) \cdot T_{Cruise}}{T_{\text{TakeOff}} + T_{\text{Landing}} + \lambda \cdot T_{Cruise}},$$

wobei A das Verhältnis zwischen der für den Flug erforderlichen Flug-Leistung und einer für den Start erforderlichen Start-Leistung, nämlich der maximalen elektrischen Leistung $W_{ElecMax}$ des Luftfahrzeugs (1) bedeutet, also

$$\lambda = \frac{W_{\text{Cruise}}}{W_{\text{ElecMax}}}.$$

3.  Verfahren nach Anspruch 1,
 **dadurch gekennzeichnet, dass** der Flug eine Reservebetriebs-Phase einer Dauer $T_{Reser}$ umfasst, so dass die elektrische Flug-Leistung $W_{ElecCruise}$ gleich

$$W_{\text{ElecCruise}} = MIN\left(W_{\text{Cruise}} ; W_{ElecCont} ; \frac{E_{\text{ElecTotal}} - W_{\text{EleMax}} \cdot (T_{\text{TakeOff}} + T_{\text{Landing}})}{T_{Cruise} + T_{Reser}}\right)$$

ist.

4.  Verfahren nach Anspruch 1,
 **dadurch gekennzeichnet, dass** der Flug eine Reservebetriebs-Phase einer Dauer $T_{Reser}$ umfasst, so dass die elektrische Flug-Leistung $W_{ElecCruise}$ gleich

$$W_{\text{ElecCruise}} = MIN\left(W_{\text{Cruise}} ; W_{ElecCont} ; \frac{E_{\text{ElecTotal}} - W_{\text{EleMax}} \cdot (T_{\text{TakeOff}} + T_{\text{Landing}})}{T_{Cruise} + T_{Reser}}\right)$$

ist, und dass die Elektrifizierungsrate $R_{Elec}$ des Fluges des Luftfahrzeugs (1) wie folgt ist:

$$R_{Elec} = \frac{T_{\text{TakeOff}} + T_{\text{Landing}} + MIN\left(\lambda ; \frac{W_{ElecCont}}{W_{\text{ElecMax}}} ; \frac{E_{\text{ElecTotal}} - W_{\text{ElecMax}} \cdot (T_{\text{TakeOff}} + T_{\text{Landing}})}{(T_{Cruise} + T_{Reser}) \cdot W_{\text{ElecMax}}}\right) \cdot T_{Cruise}}{T_{\text{TakeOff}} + T_{\text{Landing}} + \lambda \cdot T_{Cruise}}.$$

5.  Verfahren nach einem der Ansprüche 1 bis 2,
 **dadurch gekennzeichnet, dass** aus der gesamten verfügbaren elektrischen Energie $E_{ElecTotal}$ eine Reservebetriebs-Energie $E_{ElecReser}$ abgeleitet wird.

6. Verfahren nach einem der Ansprüche 1 bis 5,
**dadurch gekennzeichnet, dass** die Quelle (14) für elektrische Energie $n$ Speichervorrichtung(en) (18) aufweist, wobei $n$ eine ganze Zahl gleich 1 oder größer als 1 bedeutet, wobei für die in der Quelle (14) für elektrische Energie gesamte verfügbare Energie $E_{ElecTotal}$ gilt:

$$E_{\text{ElecTotal}} = \sum_{i=1}^{n} (E_{Bat})_i,$$

wobei i eine positive ganze Zahl von 1 bis $n$ und $(E_{Bat})_i$ die Energiekapazität einer Speichervorrichtung (18) vom Rang i bedeuten.

7. Verfahren nach einem der Ansprüche 1 bis 5,
**dadurch gekennzeichnet, dass** die Quelle (14) für elektrische Energie $n$ Speichervorrichtung(en) (18) aufweist, wobei $n$ eine ganze Zahl gleich 1 oder größer als 1 bedeutet, wobei für die in der Quelle (14) für elektrische Energie gesamte verfügbare Energie $E_{ElecTotal}$ gilt:

$$E_{\text{ElecTotal}} = k1.\sum_{i=1}^{n} (E_{Bat})_i,$$

wobei i eine positive ganze Zahl von 1 bis $n$, $(E_{Bat})_i$ die Energiekapazität einer Speichervorrichtung (18) vom Rang i und $k1$ einen Normalgebrauchs-Koeffizienten der Batterie, der strikt unter 1 liegt, bedeuten.

8. Verfahren nach Anspruch 7,
**dadurch gekennzeichnet, dass** im Notfall und/oder im Gefahrenfall der Normalgebrauchs-Koeffizient $k1$ durch einen Notfalls-Koeffizienten $k2$ ersetzt wird, der strikt über $k1$ und strikt unter 1 liegt.

9. Verfahren nach einem der Ansprüche 1 bis 8,
**dadurch gekennzeichnet, dass** die Quelle (13) für Wärmeenergie mindestens einen Verbrennungsmotor (15) umfasst, wobei die Hybrid-Triebwerksanlage (10) ein Hauptgetriebe (31) zur Leistungsübertragung aufweist, das die Rotoren (2) in Rotation antreibt, wobei der mindestens eine Verbrennungsmotor (15) und die mindestens eine elektrische Maschine (12) das Hauptgetriebe (31) zur Leistungsübertragung in Rotation antreiben.

10. Verfahren nach Anspruch 9,
**dadurch gekennzeichnet, dass** die Hybrid-Triebwerksanlage (10) einen elektrischen Generator (12, 16) umfasst, der durch das Hauptgetriebe (31) zur Leistungsübertragung oder direkt durch mindestens einen Verbrennungsmotor (15) in Rotation angetrieben wird.

11. Verfahren nach einem der Ansprüche 1 bis 8,
**dadurch gekennzeichnet, dass** die Quelle (13) für Wärmeenergie mindestens einen Verbrennungsmotor (15) umfasst, wobei die Hybrid-Triebwerksanlage (10) einen elektrischen Generator (12, 16) und so viele Elektromotoren (12, 17) wie Rotoren (2) aufweist, wobei ein Rotor (2) durch einen einzigen Elektromotor (12) in Rotation angetrieben wird, wobei der elektrische Generator (16) durch den mindestens einen Verbrennungsmotor (15) in Rotation angetrieben wird.

12. Multirotor-Luftfahrzeug (1) das umfasst:

- eine Hybrid-Triebwerksanlage (10), die mit einer Quelle (13) für Wärmeenergie, einer Quelle (14) für elektrische Energie und mindestens einer elektrischen Maschine (12) ausgerüstet ist, wobei die Quelle (13) für Wärmeenergie eine kontinuierliche thermische Leistung $W_{Th}$ liefern kann, wobei die mindestens eine elektrische Maschine (12) eine kontinuierliche elektrische Leistung $W_{ElecCont}$ und eine maximale elektrische Leistung $W_{ElecMax}$ liefern kann, und
- mindestens zwei Rotoren (2), die durch die Hybrid-Triebwerksanlage (10) in Rotation angetrieben werden,

**dadurch gekennzeichnet, dass** das Luftfahrzeug (1) eine Vorrichtung (20) zum Energie-Management der Hybrid-Triebwerksanlage (10) aufweist, die mit einem Rechner (21) und mindestens einem Speicher (22) ausgerüstet ist, zur Durchführung des Verfahrens nach den Ansprüchen 1 bis 11.

**Claims**

1. Method for managing the energy of a hybrid power plant (10) of a multi-rotor aircraft (1) during a flight, said multi-rotor aircraft (1) comprising:

   - a hybrid power plant (10) provided with a thermal energy source (13), an electrical energy source (14) and at least one electrical machine (12), said thermal energy source (13) being capable of supplying continuous thermal power $W_{Th}$, said at least one electrical machine (12) being capable of supplying continuous electrical power $W_{ElecCont}$ and a maximum electrical power $W_{ElecMax}$, and
   - at least two rotors (2) rotated by said hybrid power plant (10),

   said flight comprising a take-off phase of a duration $T_{TakeOff}$, a cruising phase of a duration $T_{Cruise}$ and a landing phase of a duration $T_{Landing}$, said multi-rotor aircraft (1) having a cruising power $W_{Cruise}$ necessary for carrying out a cruising phase, said take-off phase and said landing phase being carried out only by consuming electrical energy supplied by said electrical energy source (14), **characterised in that** said method comprises the following steps:

   - a first calculation (100) of a take-off electrical energy $E_{TakeOff}$ consumed during the take-off phase and equal to:

   $$E_{\mathrm{TakeOff}} = W_{\mathrm{ElecMax}}.T_{\mathrm{TakeOff}},$$

   - a second calculation (200) of a landing electrical energy $E_{Landing}$ consumed during the landing phase and equal to:

   $$E_{\mathrm{Landing}} = W_{\mathrm{ElecMax}}.T_{\mathrm{Landing}},$$

   - a third calculation (300) of a cruising electrical energy $E_{ElecCruise}$ available for said cruising phase and equal to:

   $$E_{\mathrm{ElecCruise}} = E_{\mathrm{ElecTotal}} - W_{\mathrm{ElecMax}}.\left(T_{\mathrm{TakeOff}} + T_{\mathrm{Landing}}\right),$$

   where $E_{ElecTotal}$ is the total electrical energy available in said electrical energy source (14) before the start of said flight of said aircraft (1),
   - a fourth calculation (400) of a cruising electrical power $W_{ElecCruise}$ available for said cruising phase and equal to:

   $$W_{\mathrm{ElecCruise}} = MIN \left( W_{Cruise} \; ; \; W_{ElecCont} ; \; \frac{E_{\mathrm{ElecTotal}} - W_{\mathrm{ElecMax}}.\left(T_{\mathrm{TakeOff}} + T_{\mathrm{Landing}}\right)}{T_{Cruise}} \right),$$

   - a comparison (500) of said cruising electrical power $W_{ElecCruise}$ and said cruising power $W_{Cruise}$, and
   - a determination (600) of a cruising thermal power $W_{ThCruise}$ necessary for said cruising phase such that:

     ◦ if $W_{ElecCruise} = W_{Cruise}$; $W_{ThCruise} = 0$, and
     ◦ if $W_{ElecCruise} < W_{Cruise}$; $W_{ThCruise} = W_{Cruise} - W_{ElecCruise}$.

2. Method according to claim 1, **characterised in that** said method comprises a fifth calculation (700) of an electrification rate $R_{Elec}$ of said flight of said aircraft (1) such that:

   $$R_{Elec} = \frac{T_{TakeOff} + T_{Landing} + MIN\left(\lambda ; \frac{W_{ElecCont}}{W_{\mathrm{ElecMax}}} ; \frac{E_{ElecTotal} - W_{ElecMax}.(T_{TakeOff} + T_{Landing})}{T_{Cruise}.W_{\mathrm{ElecMax}}}\right).T_{Cruise}}{T_{\mathrm{TakeOff}} + T_{\mathrm{Landing}} + \lambda.T_{Cruise}},$$

18

where $\lambda$ is the proportion between said cruising power necessary for cruising and a take-off power necessary for take-off, specifically said maximum electrical power $W_{ElecMax}$, of said aircraft (1) such that $\lambda = \frac{W_{\text{Cruise}}}{W_{ElecMax}}$.

3. Method according to claim 1, **characterised in that** said flight comprises an operational reserve phase of a duration $T_{Reser}$ such that said cruising electrical power $W_{ElecCruise}$ is equal to:

$$W_{\text{ElecCruise}} = MIN \left( W_{Cruise} \; ; \; W_{ElecCont}; \; \frac{E_{ElecTotal} - W_{EleMax} \cdot (T_{TakeOff} + T_{Landing})}{T_{Cruise} + T_{Reser}} \right).$$

4. Method according to claim 2, **characterised in that** said flight comprises an operational reserve phase of a duration $T_{Reser}$ such that said cruising electrical power $W_{ElecCruise}$ is equal to:

$$W_{\text{ElecCruise}} = MIN \left( W_{\text{Cruise}} \; ; \; W_{\text{ElecCont}}; \; \frac{E_{\text{ElecTotal}} - W_{\text{ElecMax}} \cdot (T_{\text{TakeOff}} + T_{\text{Landing}})}{T_{Cruise} + T_{Reser}} \right),$$

and in that said electrification rate $R_{Elec}$ of said flight of said aircraft (1) is such that:

$$R_{Elec}$$
$$= \frac{T_{TakeOff} + T_{Landing} + MIN \left( \lambda; \frac{W_{ElecCont}}{W_{\text{ElecMax}}}; \frac{E_{ElecTotal} - W_{ElecMax} \cdot (T_{TakeOff} + T_{Landing})}{(T_{Cruise} + T_{Reser}) \cdot W_{\text{ElecMax}}} \right) \cdot T_{Cruise}}{T_{\text{TakeOff}} + T_{\text{Landing}} + \lambda \cdot T_{\text{Cruise}}}.$$

5. Method according to either claim 1 or claim 2, **characterised in that** an operational energy reserve $E_{ElecReser}$ is deducted from said total electrical energy $E_{ElecTotal}$ available.

6. Method according to any of claims 1 to 5, **characterised in that**, said electrical energy source (14) comprising $n$ storage device(s) (18), $n$ being an integer greater than or equal to 1, said total electrical energy $E_{ElecTotal}$ available in said electrical energy source (14) is such that:

$$E_{\text{ElecTotal}} = \sum_{i=1}^{n} (E_{Bat})_i,$$

where $i$ is a positive integer varying from 1 to $n$ and $(E_{Bat})_i$ is the energy capacity of a storage device (18) of rank $i$.

7. Method according to any of claims 1 to 5, **characterised in that**, said electrical energy source (14) comprising $n$ storage device(s) (18), $n$ being an integer greater than or equal to 1, said total electrical energy $E_{ElecTotal}$ available in said electrical energy source (14) is such that:

$$E_{ElecTotal} = k1. \sum_{i=1}^{n} (E_{Bat})_i,$$

where $i$ is a positive integer varying from 1 to n, $(E_{Bat})_i$ is the energy capacity of a storage device (18) of rank $i$ and $k1$ is a coefficient of normal utilisation of the battery strictly less than 1.

8. Method according to claim 7, **characterised in that** in the event of an emergency and/or of danger, said coefficient of normal utilisation $k1$ is replaced by an emergency coefficient $k2$ that is strictly greater than $k1$ and strictly less than 1.

9. Method according to any of claims 1 to 8, **characterised in that**, said thermal energy source (13) comprising at least one heat engine (15), said hybrid power plant (10) comprises a main power transmission gearbox (31) rotating said rotors (2), said at least one heat engine (15) and said at least one electrical machine (12) rotating said main power transmission gearbox (31).

10. Method according to claim 9, **characterised in that** said hybrid power plant (10) comprises an electrical generator (12, 16) rotated by said main power transmission gearbox (31) or directly by at least one heat engine (15).

11. Method according to any of claims 1 to 8, **characterised in that**, said thermal energy source (13) comprising at least one heat engine (15), said hybrid power plant (10) comprises an electrical generator (12, 16) and as many electric motors (12, 17) as rotors (2), a rotor (2) being rotated by a single electric motor (12), said electrical generator (16) being rotated by said at least one heat engine (15).

12. Multi-rotor aircraft (1) comprising:

   - a hybrid power plant (10) provided with a thermal energy source (13), an electrical energy source (14) and at least one electrical machine (12), said thermal energy source (13) being capable of supplying continuous thermal power $W_{Th}$, said at least one electrical machine (12) being capable of supplying continuous electrical power $W_{ElecCont}$ and a maximum electrical power $W_{ElecMax}$, and
   - at least two rotors (2) rotated by said hybrid power plant (10),

   **characterised in that** said aircraft (1) comprises a device (20) for managing the energy of said hybrid power plant (10) that is provided with a computer (21) and at least one memory means (22) in order to implement the method according to claims 1 to 11.

Fig.2

Fig.1

Fig.3

**EP 3 599 140 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3005296
- US 9932118 B
- EP 3034834 A
- FR 2997382
- FR 3033755
- WO 2012061819 A
- EP 0782941 A
- WO 2015123737 A
- FR 2961767
- US 20180009542 A
- DE 102010021026
- US 20170225794 A
- US 20170197709 A